# EUROPÄISCHE PATENTSCHRIFT

(11) **EP 3 942 266 B1**
(45) Veröffentlichungstag und Bekanntmachung des Hinweises auf die Patenterteilung: **28.01.2026**
(21) Anmeldenummer: 20722443.7
(22) Anmeldetag: 18.03.2020
(51) Int. Cl.: G01K 1/08, G01K 1/14, G01K 1/18, G01L 19/00

(54) **SENSORANORDNUNG MIT EINEM TEMPERATURSENSORELEMENT UND VERFAHREN ZU DEREN HERSTELLUNG**
SENSOR ASSEMBLY COMPRISING A TEMPERATURE SENSOR ELEMENT, AND METHOD FOR THE PRODUCTION OF SAID ASSEMBLY
ENSEMBLE DE CAPTEUR COMPRENANT UN ÉLÉMENT DE CAPTEUR DE TEMPÉRATURE, ET PROCÉDÉ POUR SA FABRICATION

(30) Priorität: 18.03.2019 DE 102019106815
(43) Veröffentlichungstag der Anmeldung: 26.01.2022
(73) Patentinhaber: First Sensor Mobility GmbH, 01099 Dresden (DE)
(72) Erfinder: LORENZ, Daniel, 01157 Dresden (DE); PETERSEN, Lars, 01129 Dresden (DE)
(74) Vertreter: Grünecker Patent- und Rechtsanwälte PartG mbB
(86) Internationale Anmeldenummer: PCT/DE2020/100216
(87) Internationale Veröffentlichungsnummer: WO 2020/187370

(56) Entgegenhaltungen:
- EP-A1- 1 039 281
- EP-A2- 2 075 559
- DE-A1- 102007 015 196
- US-A- 4 246 787
- US-B2- 9 606 010

## Beschreibung

Die Erfindung betrifft eine Sensoranordnung, welche ein Temperatursensorelement als elektronisches Bauelement aufweist, wobei das Temperatursensorelement eine temperaturabhängige physikalische Größe misst und ein elektrisches Signal ausgibt, welches ein Maß für die Temperatur darstellt. Die Erfindung betrifft ebenso eine Sensoranordnung, in welcher ein Temperatursensorelement mit einem Druck- Sensor kombiniert ist, sowie Verfahren zur Herstellung solcher Sensoranordnungen.

Derartige Sensoranordnungen umfassen zumindest ein Temperatursensorelement, welches beispielsweise auf einer Leiterplatte angeordnet ist, zumindest Verbindungsmittel zum Abgreifen der elektrischen Messsignale der Sensoranordnung und ihren Weiterleitung an ein externes Gerät zur Auswertung und/oder Verwendung der Messergebnisse. Solche Verbindungsmittel können beispielsweise ein oder mehrere Steckkontakte, Kontaktflächen oder eine andere elektronische Komponente zur leitungsgebundenen oder drahtlosen Verbindung der Sensoranordnung mit dem externen Gerät sein.

Die Sensoranordnung umfasst weiter elektrische Leitungen, welche den Anschluss des Temperatursensorelements an die Verbindungsmittel realisieren. Diese stellen eine elektrische Verbindung des Temperatursensorelements zu den Verbindungsmitteln dar, aber ebenso eine thermische Verbindung des Temperatursensorelements zu anderen Komponenten der Sensoranordnung. Zum Schutz des Sensorelements sind zumindest das Sensorelement und die Leiterplatte umhüllt. Das umhüllende Material weist eine thermische Leitfähigkeit auf, welche an die jeweils zu messenden Temperaturbereiche und das Medium angepasst ist, welche das umhüllte Temperatursensorelement umgibt.

Zum Betrieb der Sensoranordnung, zur Aufnahme sowie Be- oder Verarbeitung der Messsignale im jeweils gewünschten Umfang und zur Weiterleitung der Ausgangssignale kann ein Temperatursensorelement ein Board aufweisen, welches die für diese Zwecke benötigten elektronischen Bauelementen und Strukturen aufweisen kann. Alternativ können diese Funktionen auf der Leiterplatte des Temperatursensorelements realisiert sein oder von einem Board einer anderen Komponente, beispielsweise einem anderen Sensor, übernommen werden, mit welcher das Temperatursensorelement verbunden ist.

Temperatursensorelemente unterscheiden sich unter anderem durch die Messbereiche, die sie abdecken, die Messgenauigkeit, die Reproduzierbarkeit und Toleranzen der Messergebnisse und die Ansprechzeit. Letzteres ist ein Maß für die Zeit, welche ein Temperatursensorelement benötigt, bis er sich nach einer Temperaturänderung auf eine Temperatur eingestellt hat, welche um eine vorgebbare Temperaturdifferenz vom neuen Temperaturwert abweicht. So ist beispielsweise ein t₉₀-Wert ein Maß für die Zeitdauer, welche das Temperatursensorelement nach einer Temperaturänderung benötigt, um jenen Wert zu erreichen, der sich aus dem Ausgangswert zuzüglich 90% der positiven oder negativen Temperaturänderung ergibt. Die Ansprechzeit wird unter anderem durch die mit dem Temperatursensorelement thermisch verbundenen Komponenten der Sensoranordnung beeinflusst.

Je nach Temperaturverlauf kann es von Vorteil sein, dass das Temperatursensorelement eine kurze Ansprechzeit hat, um Temperaturänderung zeitnah aufzuzeigen. Oder er kann eine hohe Ansprechzeit haben, um den Messverlauf zu beruhigen, zu glätten. Die Ansprechzeiten sind dabei auf Umgebungsbedingungen für die betreffende Anwendung abzustimmen, da die tatsächlich zu erwartende Zeit für den jeweiligen Temperaturausgleich vom umgebenden Medium und weiteren Parametern, wie einer möglichen Strömung im Medium oder anderem, erheblich abhängt.

Ein Drucksensor umfasst als wesentliche Komponenten ein Gehäuse mit einer Drucköffnung, an welchem das Medium anliegt, dessen Druck zu messen ist. Die bekannten Drucksensoren weisen regelmäßig eine Drucköffnung im Gehäuse oder einen in das Gehäuse ragenden Druckstutzen mit einem durch den Druckstutzen verlaufenden Druckkanal auf. Die Drucköffnung oder der Druckkanal ist mit einem im Gehäuse angeordneten mikromechanischen Druckaufnehmer (Sensorchip) einseitig verschlossen, so dass ein Medium, dessen Druck zu messen ist, durch die offene Seiter der Drucköffnung oder des Druckkanals direkt auf den Druckaufnehmer einwirkt und ein vom Druckaufnehmer ausgegebenes elektrisches Signal ein Maß für den anliegenden Druck ist.

Der Drucksensor kann zu diesem Zweck im Medium platziert werden oder mit der offenen Seite der Drucköffnung bzw. des Druckkanals an oder in einer Öffnung einer Behälterwandung angeordnet sein, welche das Medium einschließt.

Weiter umfasst der Drucksensor regelmäßig eine integrierte Schaltung, welche auf einem Board integriert ist und einer Signalverarbeitung, Signalweiterleitung und gegebenenfalls weiteren Funktionen des Drucksensors dienen kann.

Häufig ist der Drucksensor mit einem Temperatursensorelement kombiniert, beispielsweise um die Temperatur in dem Medium zu ermitteln, dessen Druck zu messen ist. Auch eine Temperaturkompensation des Drucksignals kann mittels eines integrierten Temperatursensorelements erfolgen.

Die DE 10 2007 015196 A1 bezieht sich auf einen Temperatursensor mit einem Temperatursensorelement, einem Gehäuse und einem Stützelement. Das Temperatursensorelement erfasst eine Temperatur eines Mediums. Das Gehäuse nimmt einen Anschluss auf, der elektrisch mit einer externen Schaltung verbunden ist. Der Anschluss ist mit dem Temperatursensorelement über eine Zuleitung verbunden, die eine zum Stützen des Temperatursensorelements unzureichende Festigkeit aufweist. Das Stützelement nimmt die Zuleitung auf. Das Stützelement ist aus einem Heißkleber gebildet und mit einem Teil des Gehäuses verbunden.

Die EP 1 039 281 A1 bezieht sich auf einen Messeinsatz, der aus einer Leiterplatte aus flexibler Kunststofffolie o.ä. besteht, mit einem temperaturempfindlichen Messwiderstand an einem Ende, der über Leiterbahnen mit Lötkontakten am anderen Ende zum Anschluss eines Kabels verbunden ist, und einem die Leiterplatte umgebenden Schutzrohr. Die Breite der Leiterplatte ist zumindest in dem den Messwiderstand tragenden Messbereich größer als der Durchmesser des Rohres.

Die US 4 246 787 A umfasst eine Temperaturmessvorrichtung, die insbesondere für die Verwendung in einem verdünnten Fluidmedium geeignet ist, und eine Messvorrichtung hat, die ein Widerstandselement mit kleinem Ausbreitungswiderstand enthält, das aus einem Halbleitermaterial mit positivem Temperaturkoeffizienten des spezifischen Widerstands gebildet ist. Leitungen verbinden das Element in einem Stromkreis und ein Flügel mit hoher Wärmeleitfähigkeit ist in wärmeübertragender Beziehung zu dem Element befestigt, um sich außerhalb des Einkapselungsmaterials zu erstrecken, um Wärme zu dem Element aus einer zu überwachenden Temperaturzone zu leiten. Die Vorrichtung umfasst eine Montagevorrichtung mit einer Vielzahl von Gehäuseabschnitten mit geringer Wärmeleitfähigkeit, die aneinander befestigt sind, um die Messvorrichtung dazwischen zu halten.

Die EP 2 075 559 bezieht sich auf ein medizinisches Messgerät, wie z.B. ein elektronisches Thermometer, mit einer Sonde. Die Sonde enthält ein geformtes Kunststoffsubstrat mit einem direkt auf seiner Oberfläche ausgebildeten leitenden Schaltungsmuster. Das Schaltungsmuster erstreckt sich mindestens von einem ersten Endrand des geformten Kunststoffsubstrats zu einem zweiten Endrand gegenüber dem ersten. Die Vorrichtung umfasst auch einen Sensor, der auf dem geformten Kunststoffsubstrat angebracht ist, um einen physiologischen Parameter, wie beispielsweise die Temperatur, zu erfassen. Der Sensor wird auf dem geformten Kunststoffsubstrat am ersten Endrand durch mindestens ein Positionierungselement positioniert, das in das Substrat integriert ist. Das leitende Schaltungsmuster stellt eine elektrische Verbindung zwischen dem Sensor und einem Prozessor her.

US 9 606 010 B2 bezieht sich auf eine Vorrichtung zur Messung eines Drucks und einer Temperatur eines in einem Kanal strömenden fluiden Mediums, wobei die Vorrichtung ein Drucksensorelement; einen Temperatursensor; ein Gehäuse, das einen Stutzen aufweist, wobei der Stutzen in einer Einführrichtung in den Kanal einführbar ist, wobei der Stutzen eine Innenkammer aufweist, und ein Trägersubstrat umfasst, wobei das Drucksensorelement elektrisch und mechanisch mit dem Trägersubstrat verbunden ist.

Eine Aufgabe der Erfindung besteht darin, eine Sensoranordnung mit einem Temperatursensorelement bereitzustellen, welche eine geringe Ansprechzeit, insbesondere einen geringen t₉₀-Wert hat und dabei die jeweiligen, anwendungsspezifischen Anforderungen hinsichtlich der mechanischen Stabilität im Rahmen der Herstellung und Verwendung sowie hinsichtlich der Beständigkeit gegenüber dem umgebenden Medium erfüllt.

Eine weitere Aufgabe besteht darin, dass in der Sensoranordnung ein Temperatursensorelement mit einem weiteren Sensor, beispielsweise einem Drucksensor kombiniert werden kann, und zwar ohne signifikante Verminderung dieser Eigenschaften.

Ein Gedanke der Erfindung besteht darin, dass der Wärmeeintrag in das Temperatursensorelement durch Komponenten der Sensoranordnung, ausgenommen der wärmeleitenden Umhüllung des Temperatursensorelements, reduziert wird, Das betrifft zumindest die direkt mit dem Temperatursensorelement in thermischem Kontakt stehenden Komponenten, wie die elektrischen Leitungen und der Träger. Mit einer Reduzierung des Wärmeeintrags über diese Elemente kann auch der Einfluss anderer, weiter entfernter Komponenten der Sensoranordnung vermindert werden.

Auf diese Weise erfolgt eine thermische Trennung des Temperatursensorelements von anderen Komponenten der Sensoranordnung die in entfernteren Bereich liegen oder in entfernte Bereiche ragen. Der Begriff des entfernten Bereichs ist mit keinem Mindestmaß der Entfernung zwischen dem Temperatursensorelement und dem betreffenden Bereich verknüpft. Er soll lediglich der begrifflichen Unterscheidung von der, dazu räumlich getrennten, Messumgebung dienen.

Im Unterschied dazu wird der Wärmeeintrag vom umgebenden Medium in das Temperatursensorelement über dessen Umhüllung verbessert, indem dafür ein gut wärmeleitendes Material verwendet wird.

Eine thermische Trennung kann über Materialeigenschaften und eine Reduzierung der Querschnitte von Komponenten verbessert werden. Letzteres beeinflusst jedoch die mechanische Stabilität und Beständigkeit der betreffenden Komponente, so dass diese ebenso durch geeignete Maßnahmen vor unerwünschtem mechanischem Stress zu schützen ist.

Nachfolgend werden zur Realisierung des Gedankens verwendete Merkmale beschrieben. Diese wird der Fachmann in verschiedenen Ausführungsformen verschieden miteinander kombinieren, soweit ihm das für einen Anwendungsfall sinnvoll und geeignet erscheint.

Die erfindungsgemäße Sensoranordnung ist im Anspruch 1 definiert.

Die Sensoranordnung umfasst ein Temperatursensorelement und einen Träger, welcher der Halterung des Temperatursensorelements dient. Zu diesem Zweck ist an einem Ende ein Messabschnitt ausgebildet. Als Messabschnitt ist jener Bereich des Trägers bezeichnet, auf welchem das Temperatursensorelement angeordnet werden kann. Der Messabschnitt kann ein freies Ende des Trägers sein, wobei die Grundfläche des Messabschnitts bevorzugt jener Fläche entspricht, die benötigt wird, um das Temperatursensorelement, alternativ mit oder ohne Leiterplatte und optional mit separaten Kontaktflächen, zu montieren und zu kontaktieren. Durch eine derart minimierte Grundfläche kann die Ansprechzeit des Temperatursensorelements vermindert werden.

Das Temperatursensorelement der Sensoranordnung kann auf einer Leiterplatte montiert sein oder direkt auf dem Träger. Die Leiterplatte oder das Temperatursensorelement selbst können elektronische Bauteile aufweisen, welche zum Betreiben des Temperatursensorelements geeignet sind. Dazu gehören beispielsweise die Steuerung der Messabläufe, die Weiterleitung und optional auch eine Zwischenspeicherung und/oder eine erste Verarbeitung der Messsignale und anderes. Derartige elektronische Bauteile können alternativ oder ergänzend auf einem Board angeordnet sein, die dem Temperatursensorelement oder einem weiteren Gerät, beispielsweise einem Drucksensor, zugehören kann, welches mit dem Temperatursensorelement in der Sensoranordnung kombiniert, beispielsweise in dem Temperatursensorelement integriert ist.

Zur Reduzierung der Wärmeleitung zum Temperatursensorelement über den Träger weist dieser im Messabschnitt und jedem daran direkt anschließenden Abschnitt eine schlechte thermische Leitfähigkeit auf. Die Materialien und/oder die Temperaturleitfähigkeitswerte des Messabschnitts und der daran direkt anschließenden Abschnitte können, beispielsweise aus thermischen oder verfahrenstechnischen Gründen oder wegen chemischer oder mechanischer Anforderungen, übereinstimmen oder voneinander abweichen. Optional kann der gesamte Träger aus einem Material mit schlechter thermische Leitfähigkeit bestehen.

Die Sensoranordnung umfasst weiter Verbindungsmittel zur elektrischen Verbindung des Temperatursensorelements zu einem externen Gerät. Die Verbindungsmittel, die zur Übertragung von Ausgangssignalen des Temperatursensorelements zu einem externen Gerät geeignet sind, können beispielsweise Steckkontakte, nachgiebige Kontakte oder andere Kontakte sein. Auch Übertragungsmittel zur drahtlosen Übertragung der Ausgangssignale sind möglich. Die Verbindungsmittel können auf dem Träger in einem Verbindungsabschnitt angeordnet sein, alternativ auch auf einer weiteren Komponente, welche Teil der Sensoranordnung oder eines anderen Geräts ist, in welchem das Temperatursensorelement integriert ist.

Die Verbindungsmittel dienen der Übertragung der gemessenen Signale und dem Betrieb der Sensoranordnung mittels dafür geeigneter externer Geräte. Letztere sind der jeweiligen Anwendung der Sensoranordnung angepasst und nicht Bestandteil der Sensoranordnung.

Die Sensoranordnung umfasst weiter eine Umhüllung, welche zumindest das Temperatursensorelement umschließt. Diese Umhüllung ist direkt dem zu messenden Medium ausgesetzt und dient dem physikalischen und chemischen Schutz des Temperatursensorelements. Die Umhüllung hat weiter die Aufgabe der Wärmeübertragung zwischen dem Medium und dem Temperatursensorelement. Die Umhüllung kann an dem Träger anschließen oder zumindest auch Abschnitte von diesem, wie den Messabschnitt, ebenfalls umschließen.

Die thermische Leitfähigkeit des Materials der Umhüllung ist so bemessen, dass eine gute Wärmeleitung zum Temperatursensorelement gewährleistet ist. Für eine geringe Ansprechzeit des Temperatursensorelements sind unter anderem eine hohe thermische Leitfähigkeit und eine geringe Wärmeaufnahmefähigkeit der Umhüllung sowie einer gute Wärmeübertragung von der Umhüllung auf das Temperatursensorelement wünschenswert. Die Umhüllung gewährleistet zudem den notwendigen physikalischen und chemischen Schutz gegenüber dem Medium. Die Materialwahl, die Materialkombination und das Design der Umhüllung sind entsprechend beider Funktionen konfiguriert.

Die Sensoranordnung umfasst weiter elektrische Leitungen zum elektrischen Anschluss des Temperatursensorelements an die Verbindungsmittel; Die elektrischen Leitungen der Sensoranordnung sind von den Leitungen und Leitungsstrukturen des Temperatursensorelements zu unterscheiden. Letztere können vollständig in der Umhüllung des Temperatursensorelements eingeschlossen sein und dienen lediglich der Verbindung des Temperatursensorelements mit der Leiterplatte und/oder mit elektronischen Bauelementen auf der Leiterplatte und/oder mit den elektrischen Leitungen. Die elektrischen Leitungen zur Verbindung des Temperatursensorelements mit den Verbindungsmitteln überwinden regelmäßig größere Strecken und sind infolge dessen größerem mechanischen Stress ausgesetzt, als die Leitungen und Leitungsstrukturen des Temperatursensorelements. Die elektrischen Leitungen können in Abhängigkeit von verschiedenen, durch den Anwendungsfall bestimmten Parametern, wie dem Design der Sensoranordnung, der mit den elektrischen Leitungen zu überwindenden Strecke, dem zu erwartenden mechanischen Stress und anderen, ein- oder mehrteilig ausgeführt sein.

Die elektrischen Leitungen verbinden das Temperatursensorelement, gegebenenfalls via Leiterplatte, auf welcher des Temperatursensorelements montiert ist, mit den Verbindungsmitteln. Sie stellen neben der elektrischen Verbindung auch eine thermische Verbindung zu einem entfernten Bereich dar, dessen Temperatur von der Temperatur in der Umgebung des Messabschnitts, nachfolgend auch als Messumgebung bezeichnet, in einem für den jeweils zutreffenden Messbereich und die dafür gewünschte Messgenauigkeit signifikanten Maß abweicht.

Zur thermischen Entkopplung des Temperatursensorelements von der Temperatur des entfernten Bereichs sind die elektrischen Leitungen sehr dünn, beispielsweise weisen sie einen Querschnitt mit Flächen vom gleich oder kleiner 0,08 mm², bevorzugt gleich oder kleiner 0,05 mm², weiter bevorzugt gleich oder kleiner 0,025 mm², weiter bevorzugt gleich oder kleiner 0,01 mm², weiter bevorzugt gleich oder kleiner 0,005 mm², ausgebildet. Mit fortschreitender technischer Entwicklung können diese Werte auch unterschritten werden. Die Leitungen können einen runden oder quadratischen oder anders geformten Querschnitt aufweisen.

Die in den angegebenen Dicken verwendeten elektrischen Leitungen können auf verschiedene Weise ausgeführt sein, um die Leitungen trotz ihres geringen Querschnitts sowohl in der Herstellung handhabbar und kostengünstig als auch in der Verwendung ausdauernd zuverlässig zu gestalten. Dabei sind die elektrischen Leitungen direkt auf dem Träger oder auf einem Leitungsträger und mittels diesem auf dem Träger angeordnet. Eine solche Anordnung bietet die für die zuvor genannten geringen Leitungsquerschnitte erforderliche mechanische Stabilisierung und zudem die Möglichkeit, dass die elektrischen Leitungen der zumindest abschnittsweise, bevorzugt entlang des gesamten Trägers der Formgebung des Trägers, dessen Oberflächentopografie, folgen. Der Träger fungiert gleichzeitig als Schutz für die elektrischen Leitungen. Ein Schutz der einzelnen Leitung ist nicht erforderlich. Mit den nachfolgend beschriebenen Verfahren vervielfältigen sich die Möglichkeiten zur Herstellung der elektrischen Leitung und wird die Ausbildung komplexer und variabler Leitungsführungen möglich.

In einer ersten Gestaltung sind zumindest die elektrischen Leitungen direkt auf dem Träger, optional auf einem separaten Leitungsträger, welcher mit dem Träger verbunden ist, mittels LDS (Laser-Direkt-Strukturierung) hergestellt. Der mittels LDS hergestellte Träger ist als MID (Molded Interconnect Devices oder Mechatronic Integrated Devices) ausgeführt, d. h. er weist einen räumlich integrierten elektrischen Schaltungsträger auf, bei welchem mechanische, elektronische und weitere Funktionen in einem Bauteil, dem Träger oder dem separaten Leitungsträger, integriert sind und somit 3-dimensionale Bauteilgeometrien möglich sind. Die LDS-Technologie ist bekannt und wird bisher verwendet, um beispielsweise elektronische Funktionen, insbesondere elektrische Leitungen, direkt in oder auf nahezu beliebig geformten Bauteilen zu integrieren. Neben Kunststoffen können diese Bauteile aus Glas, Keramik oder speziell beschichteten Metallen bestehen.

Zur Herstellung der Leitungen oder Bauelemente stehen verschiedene Techniken zur Verfügung, wie die additive oder subtraktive Laserdirektstrukturierung, das Zweikomponentenspritzgießen, das Heißprägen, das Folienhinterspritzen, das Maskenbelichtungsverfahren, das direkte Leiterzugschreiben oder andere. Zur Ausführung der Verfahren wird auf die jeweilige Fachliteratur verwiesen.

MID können elektrischen Leitungen aufweisen, die direkt auf dem Träger oder einem beliebig geformten Leitungsträger, der Oberflächentopografie folgend und mit geeigneter, auch sehr freier und differenzierter Leitungsführung, die beispielsweise die besagte thermische Trennung des Temperatursensorelements unterstützt, ausgeführt sind. Ergänzend können auch Bauelemente, beispielsweise Kontaktflächen im Messabschnitt und/oder im Verbindungsabschnitt ausgebildet sein. Diese können der Verbindung der elektrischen Leitungen mit dem Temperatursensorelement und/oder mit den Verbindungsmitteln dienen. Auch weitere elektronische Bauelemente können mittels LDS ergänzt werden.

Auch solche optische, thermische, fluidische und mechanische Funktionen können mittels LDS ergänzt werden, welche die mechanische Stabilität, die Sensorfunktion und/oder dessen thermische Trennung von den anderen Komponenten des Temperatursensorelements und/oder jenem Gerät, in welchem das Temperatursensorelement integriert ist, unterstützen.

In einer alternativen Ausführungsform können die elektrischen Leitungen mittels Flex-Leiterplatte ausgebildet sein. In diesem Fall sind die elektrischen Leitungen auf einer Leiterplatte ausgebildet, welche flexibel ist und auf der Oberfläche des Trägers, deren Struktur folgend, fixiert werden kann. Auch in diesem Fall sind die elektrischen Leitungen vor unerwünschtem mechanischem Stress geschützt und können in der gewünschten Dicke verwendet werden. Weiter können auf der Flex-Leiterplatte, wie oben zum MID beschrieben, ergänzende elektronische Bauelemente und/oder ergänzende Funktionen integriert sein.

Eine weitere Ausgestaltung verwendet eine Leiterplatte, welche nur abschnittsweise flexibel und im Übrigen starr ist. Bei dieser werden Abschnitte einer solchen Leiterplatte, an die höhere Ansprüche in der Stabilität gestellt werden, durch eine starre Platte verstärkt. Eine solche Leiterplatte weist flexible Abschnitte und starre Abschnitte eines Verbundes von Flex-Leiterplatte und Verstärkungsplatte auf. Das Bonden von elektrischen Leitungen auf Bondpads erfordert beispielsweise eine solche höhere Stabilität, da sowohl das Bonden selbst als auch die Tests von Bondverbindungen die Leiterplatte mechanisch derart beanspruchen können, dass eine Flex-Leiterplatte nicht standhalten oder zumindest verzogen würde. Aus diesem Grund können die Abschnitte der Bondpads verstärkt sein. Auch weitere hoch beanspruchte Abschnitte können so verstärkt sein. Ergänzend kann das Temperatursensorelement Fixierelemente aufweisen, welche die Leiterplatte in ihrer Lage fixiert. Beispiele dazu sind im Ausführungsbeispiel genannt.

Die Montage eines Leitungsträgers der MID-Ausführung oder der vollständig oder abschnittsweise flexiblen Leiterplatte auf dem Träger kann mittels Heiß- oder Kalt-Kleber, mittels mechanischer Fixierung oder auf andere geeignete Weise erfolgen.

Eine weitere Ausführungsform der elektrischen Leitungen ist deren Ausbildung als Leadframe. Leadframes können in der gewünschten geringen Dicke und mit komplexem Design bei niedrigen Produktionskosten hergestellt werden. Das Leadframe umfasst die benötigen Kontaktflächen für das Temperatursensorelement und für die Verbindungsmittel und ist auf dem Träger montiert. Auch das Leadframe verbessert die mechanische Stabilität der verwendeten dünnen elektrischen Leitungen.

Durch die Kombination der thermischen Entkopplung des Temperatursensorelements mittels dünner elektrische Leitungen und schlecht temperaturleitendem Träger mit der guten Wärmeleitung und Wärmeübertragung der Umhüllung ist eine kurze Ansprechzeit des Temperatursensorelements möglich, wobei die geeigneten Materialien und deren thermischen Eigenschaften von verschiedenen Parametern abhängen. Das sind unter anderem der Temperaturmessbereich, der Querschnitt des Trägers zumindest in jenen Abschnitten, in welchen die Wärmeleitung zum Temperatursensorelement reduziert werden soll, Design und Dicke der Umhüllung, das das Temperatursensorelement umgebende Medium und andere. Ein neben der thermischen Entkopplung ebenfalls zu berücksichtigender Faktor für unverfälschte Temperaturmessungen ist eine geringe Eigenerwärmung des Sensorelements selbst. Diese kann durch die Verwendung geeigneter elektronischer Bauelemente reduziert werden, wie nachfolgend dargelegt.

Beispielhaft, jedoch nicht beschränkend, kann der Träger aus einem Kunststoff bestehen, welcher zumindest im Messabschnitt und den direkt daran anschließenden Abschnitten eine thermische Leitfähigkeit von 5*10⁻⁶ m²/s oder kleiner, bevorzugt 2,5*10⁻⁶ m²/s oder kleiner, weiter bevorzugt 10⁻⁶ m²/s oder kleiner, weiter bevorzugt 5*10⁻⁷ m²/s oder kleiner, weiter bevorzugt 10⁻⁷ m²/s oder kleiner, weiter bevorzugt 5*10⁻⁸ m²/s oder kleiner, weiter bevorzugt 10⁻⁶ m²/s oder kleiner, jeweils bei 20°C, aufweist.

Die thermische Leitfähigkeit der Umhüllung sollte zumindest eine halbe Größenordnung, bevorzugt mehr als eine oder ein und eine halbe Größenordnungen höher sein als die des Trägers. Eine Größenordnung beträgt 1*10¹.

In einer weiteren Ausgestaltung der Sensoranordnung ist das Temperatursensorelement eine Diode. Dioden haben den Vorteil einer linearen Temperaturabhängigkeit sowie eines geringen Kontaktstroms (im µA-Bereich) und damit verbunden einer geringen Verlustleistung und Eigenerwärmung. In Verbindung mit der zuvor beschriebenen Reduzierung des Wärmeeintrags über den Träger kann das Temperatursensorelement sehr sensibel gestaltet werden, so dass er auch für die Temperaturmessung in Gasen verwendbar ist und dabei die gewünschten geringen Ansprechzeiten liefert.

Das beschriebene Temperatursensorelement kann in einem weiteren Sensor, beispielsweise jedoch nicht beschränkend in einem Drucksensor integriert sein. Die beschriebenen Varianten der Ausbildung und mechanischen Stabilisierung der elektrischen Leitungen einer solchen Sensoranordnung unterstützen ein strukturiertes Design des Trägers, welches dazu dient, das Temperatursensorelement im Drucksensor an der gewünschten Position zu montieren. So kann das Temperatursensorelement beispielsweise in der oder an der Drucköffnung bzw. im oder am Druckstutzen montiert sein, um den Temperaturzustand des anliegenden Mediums zu ermitteln. Auch andere Positionen in Bezug auf den Drucksensor sind möglich. Beispielsweise kann mittels des Trägers der Sensoranordnung eine gewünschte Distanz zwischen Temperatursensorelement und Druckaufnehmer hergestellt werden. Auch mehrere Temperatursensorelemente können an verschiedenen Positionen und/oder verschiedenen Distanzen angeordnet sein.

Optional kann, wie zuvor bereits dargelegt, zumindest eine folgenden Funktionen der Sensoranordnung durch das Board und dessen Elektronik des Drucksensors realisiert sein: Signalverarbeitung, Zwischenspeicherung, Signalweiterleitung, Steuerung der Messung und andere. Zu diesem Zweck ist das Board des Drucksensors, welche die dafür geeigneten elektronischen Komponenten aufweist mit dem Temperatursensorelement oder dessen elektrischen Leitungen verbunden.

Aufgrund der thermischen Trennung des Temperatursensorelements mittels des schlecht wärmeleitenden Trägers ist der Einfluss der Wärmeentwicklung der Elektronik des Temperatursensorelements selbst und/oder des Drucksensors vermieden oder zumindest signifikant reduziert.

Die Sensoranordnung kann eine geeignete Umhüllung aufweisen, welche die Sensoranordnung vor äußerem Stress schützt. Die Umhüllung lässt zumindest die Sensorsignaleingänge der in der Sensoranordnung integrierten Sensorelemente, hier auch als Messkopf der Sensoranordnung bezeichnet, frei, insbesondere das umhüllte Temperatursensorelement.

Die beschriebene Sensoranordnung mit einer Kombination aus Temperatursensorelement und Drucksensor kann beispielsweise in einer Messanordnung zur Anwendung kommen, welche neben der Sensoranordnung die Wandung eines Behältnisses oder einer Leitung umfasst, in der sich ein Medium dessen beispielsweise Druck und Temperatur zu messen sind. In einer solchen Messanordnung ragt der Messkopf der Sensoranordnung, welcher in dieser Ausführungsvariante durch das Temperatursensorelement und/oder den Eingang des Druckkanals gebildet ist, je nachdem, welche der beiden Werte für sich oder in Abhängigkeit von der anderen zu messen ist, durch die Wandung in das Volumen oder den Volumenstrom des Mediums.

Zur Lösung der Aufgabenstellung wird ein Verfahren wie im Anspruch 10 definiert angegeben, bei welchem folgende Verfahrensschritte ausgeführt werden:
Zunächst wird ein Temperatursensorelement bereitgestellt, dessen Ausführung und Leistungsparameter an die jeweiligen Messaufgabe angepasst ist. Weiter werden ein Träger bereitgestellt, welcher der Halterung des Temperatursensorelements dient, sowie Verbindungsmittel. welche der elektrischen Verbindung der Sensoranordnung mit einem externen Gerät dienen. Zur Ausführung des Temperatursensorelements, des Trägers und der Verbindungsmittel wird auf die obigen Darlegungen zur Sensoranordnung verwiesen. Der Träger kann in Abhängigkeit von seiner Ausgestaltung vorgefertigt oder im Rahmen der Herstellung der Sensoranordnung gefertigt werden. Nachfolgend wird das Temperatursensorelement mittels geeigneter stoff-, form-oder kraftschlüssiger Verbindung auf dem Träger montiert.

Weiter werden die elektrischen Leitungen auf dem Träger ausgebildet, wobei die Montage des Temperatursensorelements nicht zwingend vor der Ausbildung der elektrischen Leitungen auf dem Träger erfolgen muss. Auch eine umgekehrte Reihenfolge ist möglich, sofern die Montage des Temperatursensorelements die Leitungen nicht schädigt und die Lage der Leitungen die Montage des Temperatursensorelements nicht behindert. Die Reihenfolge kann auch von dem zur Anwendung kommenden und nachfolgend näher beschriebenen Verfahren zur Ausbildung der elektrischen Leitungen abhängen.

Sind Temperatursensorelement und elektrische Leitungen auf dem Träger angeordnet, kann die Verbindung zwischen dem Temperatursensorelement und den Verbindungsmitteln via elektrische Leitungen hergestellt werden. Dafür können Kontaktflächen verwendet werden, welche am Temperatursensorelement und/oder auf dem Träger, d. h. dem Träger selbst oder einem darauf montierten Leitungsträger gemäß nachfolgender Beschreibung, und/oder an den Verbindungsmitteln angeordnet sein können.

Erfindungsgemäß werden elektrische Leitungen ausgebildet, die zur Reduktion des Wärmeeintrags in das Temperatursensorelement über diese Leitungen eine Querschnittsfläche von gleich oder kleiner 0,08 mm² aufweisen. Zum Schutz dieser dünnen Leitungen werden sie zumindest in solchen Abschnitten, in denen mit zu Schädigungen führendem Stress zu rechnen ist, der Formgebung des Trägers folgend ausgebildet. D.h. die Leitungen liegen in diese Abschnitten am Träger an oder sind in dessen Oberfläche integriert, so dass der Träger den Stress aufnimmt und die Leitungen schützt. Optional können die Leitungen in solchen bevorzugt kurzen Abschnitten frei über dem Träger verlaufen, in welchem z.B. der Stress auf den betreffenden Leitungsabschnitt infolge der Oberflächengestaltung des Trägers größer sein wird als der von außen zu erwartende Stress oder wo eine Distanz zwischen dem Träger und einer Kontaktfläche für eine elektrische Leitung zu überwinden ist. Bevorzugt verlaufen die elektrischen Leitungen über ihre gesamte Länge auf dem Träger.

In einem weiteren Verfahrensschritt wird das Temperatursensorelement, optional einschließlich der Kontaktflächen zu dessen elektrischer Kontaktierung, mittels eines gut wärmeleitenden Materials umhüllt.

Umhüllung der Sensoranordnung mit einem entsprechend der beabsichtigten Anwendung geeigneten Material. Die Umhüllung kann mit den bekannten Verfahren erfolgen, beispielsweise jedoch nicht beschränkend durch ein Gehäuse oder eine Umspritzung oder eine Kombination von beidem.

Die letzten beiden Schritte zur Umhüllung des Temperatursensorelements und der Sensoranordnung sind nicht zwangsläufig in der angegebenen Reihenfolge auszuführen. Soll beispielsweise das Temperatursensorelement im Drucksensor integriert werden, kann die vorherige Umhüllung des Temperatursensorelements zu dessen Schutz oder zur Vereinfachung der Endmontage ebenso von Vorteil sein, wie umgekehrt dessen Umhüllung nach seiner Integration in der Sensoranordnung. Die Umhüllung der Sensoranordnung kann mit einem von der Umhüllung des Temperatursensorelements abweichenden Material erfolgen. Beispielsweise kann Temperaturleitfähigkeit und Wärmeaufnahmefähigkeit der Umhüllung der Sensoranordnung signifikant schlechter sein, um einen Wärmeeintrag über diese Umhüllung in das Temperatursensorelement zu vermeiden oder zumindest zu vermindern.

Diese Aufzählung der Verfahrensschritte dient der Erläuterung der Erfindung und erhebt keinen Anspruch auf Vollständigkeit. Weitere Verfahrensschritte, beispielsweise zur Ergänzung erforderlicher oder ergänzender Elektronik oder anderes, können inkludiert sein.

Die elektrischen Leitungen können wie oben bereits beschrieben direkt auf dem Träger oder auf einem separaten Leitungsträger ausgebildet sein. Letzterer wird anschließend mit den Leitungen auf Träger mittels geeigneter kraft-, form- oder stoffschlüssiger Verbindungen fixiert. Die Ausführung und die Montage des Leitungsträgers erfolgen dabei wiederum derart, dass die Leitungen wie oben beschrieben zumindest abschnittsweise der Formgebung der Trägers folgen.

Für die Ausbildung der elektrischen Leitungen kommen verschieden Verfahren in Betracht.

Beispielsweise kann eine subtraktive und additive Laser-Strukturierung des Trägers unter Ausbildung der elektrischen Leitungen direkt auf dem Träger erfolgen, Eine additive Laserstrukturierung wird auch als LDS-Technologie bezeichnet. Bei dieser wird zur Herstellung des Trägers ein thermoplastischer Kunststoff verwendet, der mit einer nichtleitenden laseraktivierbaren Metallverbindung dotiert ist. Die Leitungsstrukturen werden mittels Laser und nachfolgender Metallisierung der Laserbahn auf der Oberfläche des Trägers hergestellt. Bei der subtraktiven Laserstrukturierung werden die elektrischen Leitungen in eine metallisierte Oberfläche des Trägers mittels strukturiertem Ätzresist und Ätzen eingebracht.

Eine weitere verwendbare Methode zur Herstellung der elektrischen Leitungen ist das Zweikomponentenspritzgießen. Dabei wird ein Vorspritzling des Trägers hergestellt, auf welchem nachfolgend die elektrischen Leitungen mittels eines zweiten Spritzgießschrittes mit dem gewünschten Verlauf erzeugt werden.

In einem weiteren alternativen Verfahren werden die elektrischen Leitungen mittels Heißprägen auf den Träger oder auf einem Leitungsträger gedruckt,
Alternativ kann ein Träger oder ein Leitungsträger mit den elektrischen Leitungen mittels Folienhinterspritzen hergestellt werden, Bei diesem Verfahren werden die Leitungen die auf einer Trägerfolie vorliegen, infolge der Wärmeeinwirkung beim Spritzgießen von der Trägerfolie auf das Spritzgussteil, hier den Träger oder den Leitungsträger, übertragen.

Alternativ können die elektrischen Leitungen auf einer zumindest abschnittsweise flexiblen Leiterplatte mit den bekannten Verfahren zur Herstellung von Leiterplatten und Leiterbahnen ausgebildet werden, In den flexiblen Abschnitten der Leiterplatte sind das elektrisch isolierende Trägermaterial und die darauf befindlichen Leiterbahnen flexibel ausgebildet, so dass die elektrischen Leitungen in diesen Abschnitten Richtungsänderungen der Oberfläche des Trägers folgen können. Sind Abschnitte der Leiterbahn dauerhaft oder temporär höherem beispielsweise mechanischem oder thermischem Stress ausgesetzt, können diese Abschnitte auch starr ausgebildet sein. Abschnitte mit erhöhtem mechanischem Stress sind beispielsweise jene, in denen Kontaktflächen zur Herstellung der Verbindung mit den Verbindungsmitteln angeordnet sind. Alternativ kann auch der gesamte Leitungsträger flexibel ausgebildet sein.

Auch die Herstellung der elektrischen Leitungen in Form eines Leadframes, welcher auf dem Träger oder auf einem Leitungsträger fixiert wird, ist geeignet.

Mittels dieser Verfahren wird ein dreidimensionaler, integrierter Leitungs- oder Schaltungsträger, je nach Ausstattung des Trägers, hergestellt, der die beschriebenen dünne elektrischen Leitungen trägt, schützt und mit einem sehr variablen, auf verschiedene Anwendungsfälle und Ausgestaltungen der Sensoranordnung anpassbaren Design ausgeführt werden kann. Darüber hinaus ist der Träger mit einem Leitungsträger als ein Verbundbauteil herstellbar, dessen Komponenten, Träger und Leitungsträger, keine oder nur geringe Differenzen im thermischen Ausdehnungsverhalten aufweisen, wodurch die Zuverlässigkeit auch unter harschen Anwendungsbedingungen verbessert werden kann.

Soll das Temperatursensorelement in einem Drucksensor integriert sein, kann er an der oder in der Drucköffnung bzw. am oder im Druckstutzen montiert werden. Die Montage und Ausführung der elektrischen Kontaktierungen des Temperatursensorelements ist so auszuführen, dass die Messsignale des Temperatursensorelements über Verbindungsmittel von außerhalb des Drucksensors abgegriffen werden können. Das kann direkt erfolgen oder indirekt über die Außenkontakte des Drucksensors.

Ein solcher Drucksensor kann beispielsweise an oder in einem Flüssigkeitstank, einem Fördermodul oder einer anderen Komponente eines Flüssigkeitstanks oder an anderer Stelle verwendet werden, um Druck und Temperatur eines Mediums zu messen.

Die Erfindung soll nachfolgend an einem Ausführungsbeispiel beispielhaft jedoch nicht beschränkend, dargestellt werden.

Die zugehörigen Zeichnungen zeigen die Vorrichtung nur in dem Umfang, wie es zur Erläuterung der Erfindung erforderlich ist. Sie erheben keinen Anspruch auf Vollständigkeit oder Maßstäblichkeit. Der Fachmann würde ferner die zuvor und nachfolgend beschriebenen Merkmale in weiteren Ausführungsformen kombinieren soweit es ihm zweckdienlich und sinnvoll erscheint.

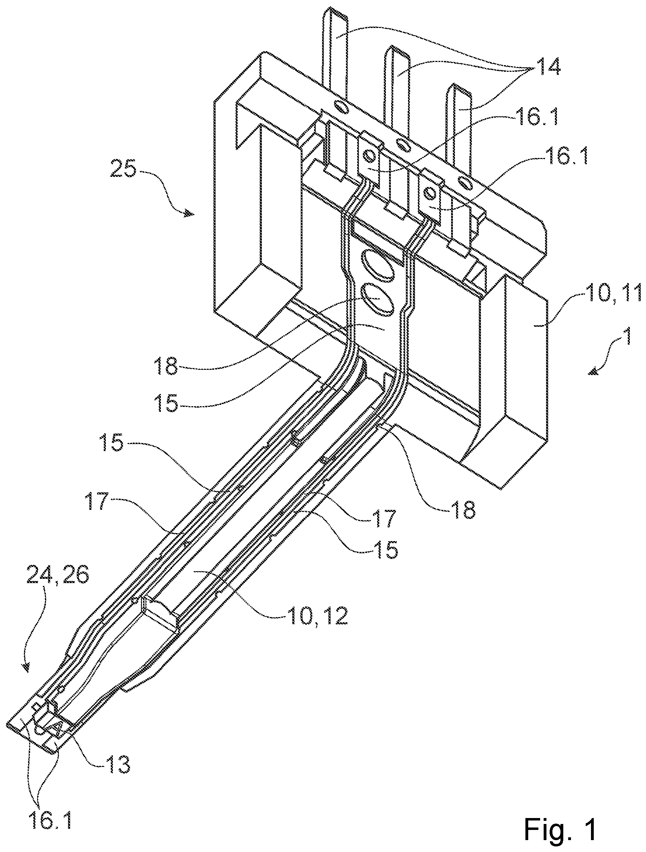

Fig. 1 stellt eine Sensoranordnung dar. in welcher ein Temperatursensorelement 13 auf einer Leiterplatte 15, in der Ausführung mit flexiblen und starren Abschnitten ausgebildet, in einem Drucksensor (nicht dargestellt) integriert ist.

Der winklig ausgebildete Träger 10 umfasst eine Trägerplatte 11 und einen Trägerarm 12. Beide stehen in einem rechten Winkel zueinander. Das freie Ende der Trägerplatte 11 weist drei Steckkontakte auf, die als Verbindungsmittel 14 dienen und zu diesem Zweck mit einem Board (nicht dargestellt) verbunden werden können. Zwischen den Steckkontakten sind zwei erste Kontaktflächen 16.1 angeordnet. Dieser Abschnitt des Trägers 10 stellt den Verbindungsabschnitt 25 des Trägers 10 dar.

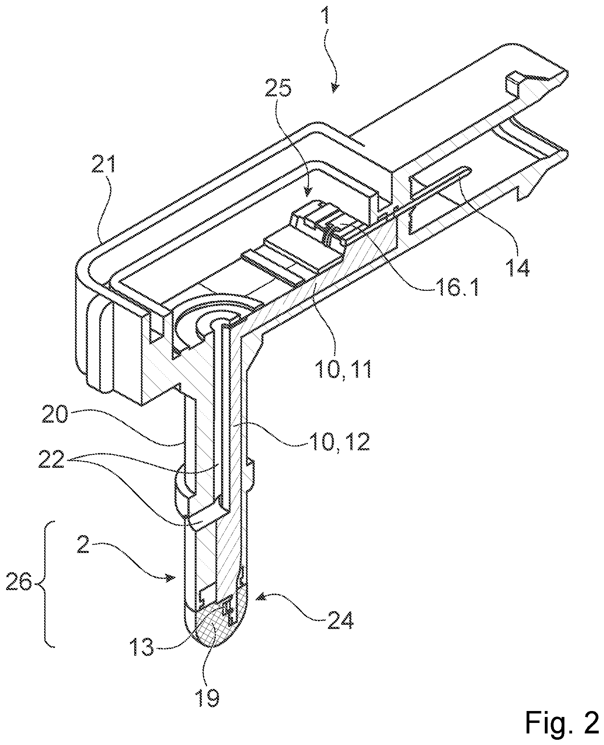

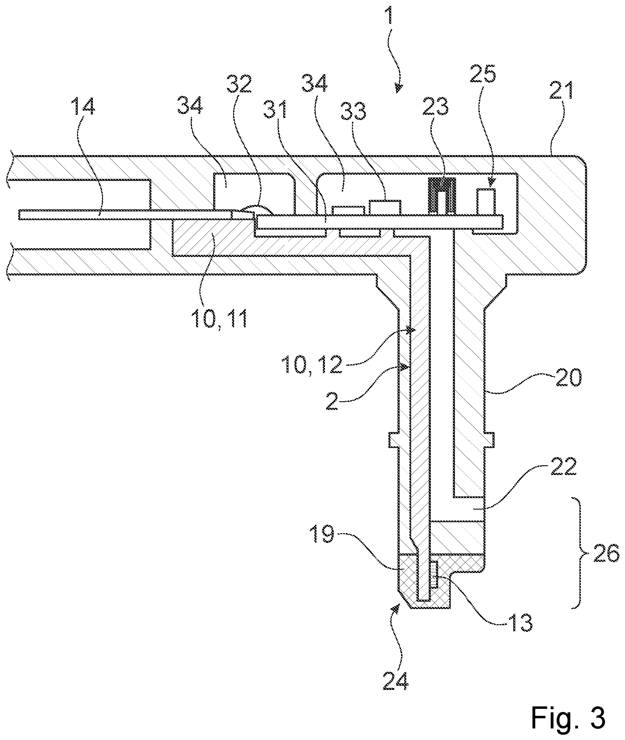

Am dem Verbindungsabschnitt 25 entgegengesetzten freien Ende des Trägerarms 12 ist das Temperatursensorelement 13 angeordnet. Dieses ist mit zwei zweiten Kontaktflächen 16.2 elektrisch verbunden, welche beispielsweise seitlich des Temperatursensorelements 13 angeordnet sein können. Das Temperatursensorelement 13, die zweiten Kontaktflächen 16.2. und das freie Ende des Trägerarms 12 ist von einer Umhüllung 19 (Fig. 2 und Fig. 3) umschlossen.

Die ersten und/oder zweiten Kontaktflächen 16.1, 16.2 sind jeweils auf einem starren Abschnitt der teilweise flexiblen Leiterplatte 15 ausgebildet. Diese erstreckt sich von den ersten Kontaktflächen 16.1 bis zu den zweiten Kontaktflächen 16.2 und ist im Bereich zwischen den ersten und den zweiten Kontaktflächen 16.1, 16.2 zumindest abschnittsweise flexibel ausgebildet. Die Leiterplatte 15 weist elektrische Leitungen 17 auf. Alternativ können die Kontaktflächen separat ausgebildet sein und mit den elektrischen Leitern 17 verbunden sein.

Die elektrischen Leitungen 17 erstrecken sich auf er Oberfläche des Trägers 10 von jeweils einer ersten Kontaktfläche 16.1 zu einer zweiten Kontaktfläche 16.2. Die Leiterplatte 15 ist mechanisch mittels Halteelementen 18 an der Trägerplatte 11 und am Trägerarm 12 fixiert.

Die Lage der Leiterplatte 15 im Bereich der ersten und/oder der zweiten Kontaktflächen 16.1, 16.2 ist mittels Fixierelementen (nicht dargestellt) auf dem Träger 10 fixiert. Als Fixierelement kann beispielsweise eine abschnittsweise oder vollständig umfassende Einfassung dieser Bereiche der Leiterplatte 15 verwendet werden, welche die Platte im Randbereich übergreifen. Alternativ oder ergänzend kann die Leiterplatte 15 umfänglich oder in der Fläche angeordnete Verzahnungselemente aufweisen, welche mit dem Träger 10 in Wirkzusammenhang stehen.

Die Verwendung einer Leiterplatte 15 mit verstärkter Platte in den Bereichen der ersten und/oder zweiten Kontaktflächen 16.1, 16.2 gestattet es, auf den Kontaktflächen eine Drahtbondverbindung zur Verbindung der elektrischen Leitungen mit dem Temperatursensorelement und/oder mit den Verbindungsmitteln, beispielsweise mittels Thermosonic-Ball-Wedge-Bonden oder Ultraschall-Wedge-Wedge-Bonden oder anderen geeigneten Verfahren, herzustellen.

In Fig. 2 und Fig. 3 stellt zwei kombinierte Druck-Temperatur-Sensoren dar. In beiden ist eine erfindungsgemäße Sensoranordnung 1 (enge Schraffur) gemäß Fig. 1 dargestellt, dessen Temperatursensorelement 15 im Druckstutzen 20 eines Drucksensors 2 (weite Schraffur) angeordnet ist. Fig. 2 zeigt den Druck-Temperatur-Sensor in perspektivischer Darstellung mit Blick auf den Druckkanal 22 des Druckstutzens 20, jedoch ohne Druckaufnehmer. Fig. 3 zeigt einen ähnlichen Druck-Temperatur-Sensor in Schnittdarstellung, dessen Druckaufnehmer 23 den Druckkanal 22 an seinem im Gehäuse 21 mündenden Ende verschließt.

Der Drucksensor 2 des Druck-Temperatur-Sensors umfasst, wie zum Stand der Technik beschrieben, ein Gehäuse 21 mit einem Druckstutzen 20 und dessen Druckkanal 22, in welchem das Medium anliegt, dessen Druck zu messen ist. Das Gehäuse 21 ist zur besseren Darstellung der im Inneren angeordneten Komponenten offen.

Der Druckkanal 22 ist an seinem im Gehäuse 21 mündenden erste Ende mit einem dort angeordneten mikromechanischen Druckaufnehmer 23 (Fig. 3) verschlossen, so dass durch den Druckstutzen 20 hindurch ein Druck direkt auf den Druckaufnehmer 23 einwirkt und vom Druckaufnehmer 23 ein elektrisches Messsignal abgreifbar ist, welches Rückschluss auf den anliegenden Druck gestattet. Das zweite Ende des Druckkanals 22 befindet sich im unteren Bereich des Druckstutzens 20. Dieser ist im Anwendungsfall durch eine Öffnung in einer Behälterwandung (nicht dargestellt), beispielsweise der Wandung eines Tanks, gegenüber dem Medium dichtend hindurchgeführt und mündet im zu messenden Medium (nicht dargestellt).

In der Sensoranordnung 1 ist ein auf dem Trägerarm eines Trägers 10 angeordnetes Temperatursensorelement 13 mit dem Drucksensor 2 derart kombiniert, dass der Druckkanal 22 nicht verschlossen ist, wobei die Trägerplatte 11 im Gehäuse liegt und der Trägerarm 12 durch den Druckstutzen 20 verläuft. Das Temperatursensorelement 13 befindet sich außerhalb des Druckstutzen 20. Die Umhüllung 19 des Temperatursensorelements 13 umschließt das Temperatursensorelement 13, die zweiten Kontaktflächen 16.2. und das freie Ende des Trägerarms 12 derart, dass eine gute Wärmeübertragung vom Medium zum Temperatursensorelement 13 erfolgt und die Umhüllung 19 an den Druckstutzen 20 anschließt. Die Umhüllung 19 in Fig. 3 unterscheidet sich von jener in Fig. 2 durch einen im unteren Bereich verringerten Querschnitt. Dieser bewirkt eine weitere Verringerung der Ansprechzeit des Temperatursensorelements 13.

Mit den in Fig. 1 bis Fig. 3 dargestellten Ausführungsvarianten eines Druck-Temperatur-Sensors zur Messung in einem Flüssigkeitstank werden unter der Verwendung von Materialien mit guter bzw. schlechter Wärmeleitung sehr kurze t₉₀-Ansprechzeiten des Temperatursensorelements 13 erzielt. Diesel liegen beispielsweise in einem flüssigen Medium oder Strömungen aufweisenden gasförmigen Medium im Bereich von einigen zehn Sekunden bis ca. 100 Sekunden. Sind im flüssigen Medium Strömungen vorhanden, können weniger als 10 Sekunden erreicht werden.

Für die Umhüllung 19 des Temperatursensorelements 13 wurde im Ausführungsbeispiel modifiziertes Polyphenylensulfid (PPS) verwendet. Das ist ein gut wärmeleitender, thermoplastischer, teilkristalliner Kunststoff für mechanische, elektrische, thermische und chemisch hochbeanspruchte Formteile unter anderem für elektronische Anwendungen. Das Material ermöglicht einen schnellen Wärmeeintrag vom Medium in das Temperatursensorelement. Für den Trägerarm 12 wurde Polybutylenterephthalat (PBT) verwendet, ein thermoplastischer Kunststoff, welcher mittels Spritzguss verarbeitbar ist und einer hohe Festigkeit, Steifigkeit und Maßbeständigkeit aufweist sowie eine gute chemische Beständigkeit. Die schlechte Wärmeleitfähigkeit des Trägerarms vermindert den Wärmeeintrag aus dem Sensor selbst in das Temperatursensorelement. Alternativ sind auch andere gut bzw. schlecht wärmeleitende Materialien für die benannten Komponenten verwendbar.

Die Verbindungsmittel 14 des Temperatursensorelements 1 gemäß obiger Beschreibung ragen aus dem Gehäuse 21 und sind mit einem Board 31 (Fig. 3) des Drucksensors 2 elektrisch verbunden, beispielsweise mittels Drahtbrücken 32. Auch die ersten Kontaktflächen 16.1 des Temperatursensorelements 1 sind, beispielsweise über Drahtbrücken (nicht dargestellt) mit dem Board 31 elektrisch verbunden, so dass ein Board 31 für die Elektronik des Temperatursensorelements 1 sowie die Elektronik des Drucksensors 2 verwendet werden kann. Die Verbindungsmittel 14 sind auf diese Weise als Steckkontakte des Druck-Temperatur-Sensors ausgebildet. Das Board 31 kann zumindest eine integrierte Schaltung, welche einer Signalverarbeitung, Signalweiterleitung und gegebenenfalls weiteren Funktionen des Drucksensors dienen kann, Speicher und weitere für den Betrieb des Druck-Temperatur-Sensors erforderliche elektronische Bauteile 33 enthalten. Andere Varianten der Verbindungsmittel und der elektrischen Verschaltung von Temperatursensorelement, Drucksensor und Board sowie mehr als ein Board sind möglich.

Das Gehäuse 21 ist geschlossen und kann mehrere voneinander getrennte Kammern 34 aufweisen.

## Patentansprüche

1. Sensoranordnung mit folgenden Komponenten:
- ein Temperatursensorelement (13),
- Verbindungsmittel (14) zur elektrischen Verbindung der Sensoranordnung (1) mit einem externen Gerät,
- elektrischen Leitungen (17) zum elektrischen Anschluss des Temperatursensorelements (13) an die Verbindungsmittel (14);
- ein Träger (10) zur Halterung des Temperatursensorelements (13) und der elektrischen Leitungen (17), welcher einen Messabschnitt (24) aufweist;
- eine Umhüllung (19), welche zumindest das Temperatursensorelement (13) umschließt;
- wobei die elektrischen Leitungen (17) eine Querschnittsfläche von gleich oder kleiner 0,08 mm² aufweisen; und
- wobei die elektrischen Leitungen (17) direkt auf dem Träger (10) oder auf einem separaten Leitungsträger (15) und mittels diesem auf dem Träger (10) angeordnet sind;
- wobei das Temperatursensorelement (13) am Messabschnitt (24) angeordnet ist;
- wobei die Sensoranordnung einen Drucksensor (2) mit einem Druckstutzen (20) als zumindest einen weiteren Sensor aufweist und
- wobei der Träger (10) abschnittsweise durch einen Druckkanal (22) des Drucksensors (2) der Sensoranordnung (1) verläuft, ohne diesen zu verschließen, und sich das Temperatursensorelement (13) außerhalb des Druckstutzens (20) des Drucksensors (2) befindet, und die Umhüllung (19) an den Druckstutzen (20) anschließt.

2. Sensoranordnung nach Anspruch 1, wobei die elektrischen Leitungen (17) als auf den Träger (19) und/oder auf den Leitungsträger (15) räumlich integrierte Schaltung oder auf einem vollständig oder zumindest abschnittsweise flexiblem Leitungsträger (15) ausgebildet sind.

3. Sensoranordnung nach Anspruch 1, wobei die elektrischen Leitungen (17) als Leadframes ausgebildet und auf dem Träger (10) montiert sind.

4. Sensoranordnung nach einem der Ansprüche 2 oder 3, wobei ergänzend zu den elektrischen Leitungen (17) zumindest Kontaktflächen (16.1, 16.2) zur Verbindung der elektrischen Leitungen (17) mit dem Temperatursensorelement (13) und/oder mit den Verbindungsmitteln (14) auf dem Träger (10) oder auf dem separaten Leitungsträger (15) ausgebildet sind.

5. Sensoranordnung nach einem der vorstehenden Ansprüche, wobei der Träger (10) aus einem Kunststoff besteht, welcher zumindest im Messabschnitt (24) und den direkt daran anschließenden Abschnitten eine thermische Leitfähigkeit von 5*10⁻⁶ m²/s oder kleiner aufweist, bezogen auf 20°C.

6. Sensoranordnung nach einem der vorstehenden Ansprüche, wobei die thermische Leitfähigkeit der Umhüllung (19) zumindest eine halbe Größenordnung höher ist als die des Trägers (10).

7. Sensoranordnung nach einem der vorstehenden Ansprüche, wobei der Träger (10) mehrteilig ausgebildet ist und/oder an einem Ende ein Messabschnitt (24) und an einem dazu beabstandeten zweiten Ende ein Verbindungsabschnitt (25) aufweist.

8. Sensoranordnung nach Anspruch 1, wobei die Sensoranordnung (1) ein Board (31) aufweist, welches mit elektronischen Bauteilen (33) bestückt ist, welche der Nutzung des Temperatursensorelements (13) dienen, wobei das Board (31) dem weiteren Sensor der Sensoranordnung (1) zugehört.

9. Messanordnung mit einer Wandung zur Begrenzung eines Volumens oder eines Volumenstroms eines Mediums und mit einer Sensoranordnung (1) nach einem der vorstehenden Ansprüche, wobei die Sensoranordnung (1) zumindest mit seinem Messkopf (26) durch die Wandung in das Volumen oder in den Volumenstrom ragt, wobei das Temperatursensorelement (13) t₉₀-Ansprechzeiten aufweist, die bei einem flüssigen Medium oder einem Strömungen aufweisenden gasförmigen Medium im Bereich von einigen zehn Sekunden bis ca. 100 Sekunden und bei einem Strömungen aufweisenden flüssigen Medium im Bereich von einem bis 10 Sekunden liegen.

10. Verfahren zur Herstellung einer Sensoranordnung nach einem der vorstehenden Ansprüche, folgende Verfahrensschritte umfassend:
- Bereitstellung eines Temperatursensorelements (13), eines Trägers (10) zur Halterung des Temperatursensorelements (13) und von Verbindungsmitteln (14) zur elektrischen Verbindung der Sensoranordnung (1) mit einem externen Gerät;
- Montage des Temperatursensorelements (13) auf dem Träger (10); wobei das Temperatursensorelement (13) am Messabschnitt (24) angeordnet ist;
- Ausbildung von elektrischen Leitungen (17), welche dem elektrischen Anschluss des Temperatursensorelements (13) an die Verbindungsmittel (14) dienen, auf dem Träger (10) und Herstellung der Verbindung zwischen dem Temperatursensorelement (13) und den Verbindungsmitteln (14) mittels der elektrischen Leitungen (17);
- wobei die elektrischen Leitungen (17) mit einer Querschnittsfläche von gleich oder kleiner 0,08 mm² ausgebildet werden und zumindest abschnittsweise der Formgebung des Trägers (10) folgen; und
- Umhüllung des Temperatursensorelements (13) mit einem wärmeleitenden Material;
- wobei die Sensoranordnung einen Drucksensor (2) mit einem Druckstutzen (20) als zumindest einen weiteren Sensor aufweist und
- wobei der Träger (10) abschnittsweise durch einen Druckkanal (22) des Drucksensors (2) der Sensoranordnung (1) verläuft, ohne diesen zu verschließen, und sich das Temperatursensorelement (13) außerhalb des Druckstutzens (20) des Drucksensors (2) befindet, und die Umhüllung (19) an den Druckstutzen (20) anschließt .

11. Verfahren nach Anspruch 10, wobei die elektrischen Leitungen (17) direkt auf dem Träger (10) ausgebildet werden oder auf einem separaten Leitungsträger (15) und mittels diesem auf dem Träger (10) montiert werden.

12. Verfahren nach einem der Ansprüche 10 oder 11, wobei die elektrischen Leitungen (17) mittels zumindest eines der Verfahren aus folgender Liste ausgebildet werden:
- additive und subtraktive Laser-Direkt-Strukturierung des Trägers (10) zur Herstellung von Leitungsstrukturen direkt auf dem Träger (10), nachfolgend auch als LDS-Technologie bezeichnet,
- Zweikomponentenspritzgießen unter Ausbildung des Trägers (10) als Vorspritzling und nachfolgend der elektrischen Leitungen (17) auf dem Vorspritzling,
- Herstellung der elektrischen Leitungen (17) auf dem Träger (10) oder auf einem Leitungsträger (15) mittels Heißprägen,
- Herstellung eines Trägers (10) oder eines Leitungsträgers (15) mit elektrischen Leitungen (17) mittels Folienhinterspritzen,
- Ausbildung der elektrischen Leitungen (17) auf einem Leitungsträger (15), welcher als zumindest abschnittsweise flexible Leiterplatte ausgebildet ist,
- Herstellung eines Leadframes.

13. Verfahren nach einem der Ansprüche 10 bis 12, wobei Kontaktflächen (16.1, 16.2) zur Kontaktierung der elektrischen Leitungen (17) direkt oder mittels Leitungsträger (15) auf dem Träger (10) ausgebildet werden.

## Claims

1. A sensor arrangement, comprising:
- a temperature sensor element (13);
- connecting means (14) electrically connecting the sensor arrangement (1) to an external device;
- electrical lines (17) electrically connecting the temperature sensor element (13) to the connecting means (14);
- a carrier (10) for holding the temperature sensor element (13) and the electrical lines (17), the carrier (10) having a measuring section (24),
- an encasing (19) enclosing the temperature sensor element (13),
- wherein the electrical lines (17) have a cross-sectional area equal to or less than 0.08 mm²; and
- wherein the electrical lines (17) are arranged directly on the carrier (10) or on a separate line carrier (15) and by means of this on the carrier (10);
- wherein the temperature sensor element (13) is arranged at the measuring section (24);
- wherein the sensor arrangement comprises a pressure sensor (2) with a pressure port (20) as at least one further sensor, and
- wherein the carrier (10) runs in sections through a pressure channel (22) of the pressure sensor (2) of the sensor arrangement (1) without closing it, and the temperature sensor element (13) is located outside the pressure port (20) of the pressure sensor (2), and the encasing (19) connects to the pressure port (20).

2. Sensor arrangement of claim 1, wherein the electrical lines (17) are designed as a spatially integrated circuit on the carrier (19) and/or on the line carrier (15) or on a completely or at least partially flexible line carrier (15).

3. Sensor arrangement of claim 1, wherein the electrical lines (17) are formed as a leadframe mounted on the carrier (10).

4. Sensor arrangement according to one of claims 2 or 3, wherein, in addition to the electrical lines (17), at least contact surfaces (16.1, 16.2) for connecting the electrical lines (17) to the temperature sensor element (13) and/or to the connecting means (14) are formed on the carrier (10) or on the separate line carrier (15).

5. Sensor arrangement according to one of the preceding claims, wherein the carrier (10) consists of a plastic which, at least in the measuring section (24) and the sections directly adjacent thereto, has a thermal conductivity of 5*10-6 m²/s or less, based on 20°C.

6. Sensor arrangement according to one of the preceding claims, wherein the thermal conductivity of the encasing (19) is at least one half order of magnitude higher than that of the carrier (10).

7. Sensor arrangement according to one of the preceding claims, wherein the carrier (10) is designed in multiple parts and/or has a measuring section (24) at one end and a connecting section (25) at a second end spaced apart therefrom.

8. Sensor arrangement according to claim 1, wherein the sensor arrangement (1) has a board (31) which is equipped with electronic components (33) which serve to use the temperature sensor element (13), wherein the board (31) belongs to the further sensor of the sensor arrangement (1).

9. Measuring arrangement with a wall for limiting a volume or a volume flow of a medium and with a sensor arrangement (1) according to one of the preceding claims, wherein the sensor arrangement (1) protrudes at least with its measuring head (26) through the wall into the volume or into the volume flow, wherein the temperature sensor element (13) has t₉₀ response times which, in the case of a liquid medium or a gaseous medium exhibiting flows, are in the range of a few tens of seconds to approximately 100 seconds and, in the case of a liquid medium exhibiting flows, are in the range of one to 10 seconds.

10. Method for manufacturing a sensor arrangement according to one of the preceding claims, comprising the following steps:
- providing of a temperature sensor element (13), a carrier (10) for holding the temperature sensor element (13), and connecting means (14) for electrically connecting the sensor arrangement (1) to an external device;
- mounting the temperature sensor element (13) on the carrier (10); wherein the temperature sensor element (13) is arranged at the measuring section (24);
- forming electrical lines (17) on the carrier (10) which serve to electrically connect the temperature sensor element (13) to the connecting means (14), and establishing of the connection between the temperature sensor element (13) and the connecting means (14) by means of the electrical lines (17);
- wherein the electrical lines (17) are formed with a cross-sectional area of 0.08 mm² or less and follow the shape of the carrier (10) at least in sections; and
- encapsulating the temperature sensor element (13) with a thermally conductive material;
- wherein the sensor arrangement has a pressure sensor (2) with a pressure port (20) as at least one further sensor, and
- wherein the carrier (10) runs in sections through a pressure channel (22) of the pressure sensor (2) of the sensor arrangement (1) without closing it, and the temperature sensor element (13) is located outside the pressure port (20) of the pressure sensor (2), and the encasing (19) connects to the pressure port (20).

11. Method according to claim 10, wherein the electrical lines (17) are formed directly on the carrier (10) or on a separate line carrier (15) and are mounted on the carrier (10) by means of the latter.

12. Method according to one of claims 10 or 11, wherein the electrical lines (17) are formed by means of at least one of the methods from the following list:
- additive and subtractive laser direct structuring of the carrier (10) for producing line structures directly on the carrier (10), hereinafter also referred to as LDS technology,
- two-component injection molding with formation of the carrier (10) as a pre-injection molded part and subsequently of the electrical lines (17) on the pre-injection molded part,
- producing the electrical lines (17) on the carrier (10) or on a line carrier (15) by means of hot stamping,
- producing a carrier (10) or a line carrier (15) with electrical lines (17) by means of film back molding,
- forming the electrical lines (17) on a line carrier (15), which is designed as a flexible printed circuit board at least in sections,
- producing a lead frame.

13. Method according to one of claims 10 to 12, wherein contact surfaces (16.1, 16.2) for contacting the electrical lines (17) are formed directly or by means of a line carrier (15) on the carrier (10).

## Revendications

1. Dispositif de capteur, comprenant les composants ci-dessous :
- un élément formant capteur de température (13),
- des moyens de connexion (14) permettant de connecter électriquement le dispositif de capteur (1) à un appareil externe,
- des conducteurs électriques (17) permettant de raccorder électriquement l'élément formant capteur de température (13) aux moyens de connexion (14) ;
- un support (10) permettant de supporter l'élément formant capteur de température (13) et les conducteurs électriques (17 et présentant une section de mesure (24) ;
- une enveloppe (19) renfermant au moins l'élément formant capteur de température (13) ;
- dans lequel les conducteurs électriques (17) présentent une surface de section transversale inférieure ou égale à 0,08 mm² ; et
- dans lequel les conducteurs électriques (17) sont agencés directement sur le support (10) ou sur un support de conducteurs (15) séparé et sont agencés sur le support (10) au moyen dudit support de conducteur séparé ;
- dans lequel l'élément formant capteur de température (13) est agencé au niveau de la section de mesure (24) ;
- dans lequel le dispositif de capteur présente un capteur de pression (2) muni d'une tubulure de pression (20) et constituant au moins un autre capteur, et
- dans lequel le support (10) s'étend par sections à travers un canal de pression (22) du capteur de pression (2) du dispositif de capteur (1) sans le fermer, et l'élément formant capteur de température (13) se trouve à l'extérieur de la tubulure de pression (20) du capteur de pression (2), et l'enveloppe (19) est raccordée à la tubulure de pression (20).

2. Dispositif de capteur selon la revendication 1, dans lequel les conducteurs électriques (17) sont réalisés sous la forme d'un circuit spatialement intégré sur le support (19) et/ou sur le support de conducteurs (15) ou sous la forme d'un support de conducteurs (15) complètement flexible ou flexible au moins par sections.

3. Dispositif de capteur selon la revendication 1, dans lequel les conducteurs électriques (17) sont réalisés sous la forme de grilles de connexion et sont montés sur le support (10).

4. Dispositif de capteur selon l'une quelconque des revendications 2 ou 3, dans lequel, en plus des conducteurs électriques (17), au moins des surfaces de contact (16.1, 16.2) permettant de connecter les conducteurs électriques (17) à l'élément formant capteur de température (13) et/ou aux moyens de connexion (14) sont réalisées sur le support (10) ou sur le support de conducteurs (15) séparé.

5. Dispositif de capteur selon l'une quelconque des revendications précédentes, dans lequel le support (10) est constitué d'un plastique qui présente une conductivité thermique inférieure ou égale à 5*10⁻⁶m²/s à 20°C au moins dans la section de mesure (24) et les sections immédiatement adjacentes.

6. Dispositif de capteur selon l'une quelconque des revendications précédentes, dans lequel la conductivité thermique de l'enveloppe (19) est supérieure d'au moins un demi-ordre de grandeur à celle du support (10).

7. Dispositif de capteur selon l'une quelconque des revendications précédentes, dans lequel le support (10) est réalisé en plusieurs parties et/ou présente une section de mesure (24) à une extrémité et une section de connexion (25) à une deuxième extrémité espacée par rapport à ladite extrémité.

8. Dispositif de capteur selon la revendication 1, dans lequel le dispositif de capteur (1) présente une carte (31) qui est équipée de composants électroniques (33) servant à utiliser l'élément formant capteur de température (13), dans lequel la carte (31) appartient à l'autre capteur du dispositif de capteur (1).

9. Dispositif de mesure avec une paroi permettant de limiter un volume ou un flux volumique d'un milieu et avec un dispositif de capteur (1) selon l'une quelconque des revendications précédentes, dans lequel le dispositif de capteur (1) fait saillie dans le volume ou dans le flux volumique à travers la paroi au moins avec sa tête de mesure (26), dans lequel l'élément formant capteur de température (13) présente des temps de réponse t₉₀ qui se situent dans la plage comprise entre quelques dizaines de secondes et environ 100 secondes pour un milieu liquide ou un milieu gazeux présentant des écoulements et dans la plage comprise entre une et 10 secondes pour un milieu liquide présentant des écoulements.

10. Procédé de fabrication d'un dispositif de capteur selon l'une quelconque des revendications précédentes, comprenant les étapes de procédé ci-dessous consistant à :
- fournir un élément formant capteur de température (13), un support (10) permettant de retenir l'élément formant capteur de température (13), et des moyens de connexion (14) permettant de connecter électriquement le dispositif de capteur (1) à un appareil externe ;
- monter l'élément formant capteur de température (13) sur le support (10) ; l'élément formant capteur de température (13) étant agencé au niveau de la section de mesure (24) ;
- réaliser des conducteurs électriques (17) servant au raccordement électrique de l'élément formant capteur de température (13) aux moyens de connexion (14) sur le support (10) et réaliser la connexion entre l'élément formant capteur de température (13) et les moyens de connexion (14) au moyen des conducteurs électriques (17) ;
- dans lequel les conducteurs électriques (17) sont réalisés avec une section inférieure ou égale à 0,08 mm² et épousent au moins par sections la forme du support (10) ; et
- envelopper l'élément formant capteur de température (13) avec un matériau thermoconducteur ;
- dans lequel le dispositif de capteur présente un capteur de pression (2) muni d'une tubulure de pression (20) et constituant au moins un autre capteur, et
- dans lequel le support (10) s'étend par sections à travers un canal de pression (22) du capteur de pression (2) du dispositif de capteur (1) sans le fermer, et l'élément formant capteur de température (13) se trouve à l'extérieur de la tubulure de pression (20) du capteur de pression (2), et l'enveloppe (19) est raccordée à la tubulure de pression (20).

11. Procédé selon la revendication 10, dans lequel les conducteurs électriques (17) sont réalisés directement sur le support (10) ou sont montés sur un support de conducteurs (15) séparé et sont montés sur le support (10) au moyen dudit support de conducteurs séparé.

12. Procédé selon l'une quelconque des revendications 10 ou 11, dans lequel les conducteurs électriques (17) sont réalisés au moyen d'au moins un des procédés de la liste ci-dessous :
- structuration additive et soustractive directe du support (10) par laser afin de produire des structures de conducteurs directement sur le support (10), appelée également ci-dessous technologie LDS,
- moulage par injection à deux composants de manière à réaliser le support (10) sous la forme d'une pièce moulée de pré-injection et à réaliser ensuite les conducteurs électriques (17) sur la pièce moulée de pré-injection,
- production des conducteurs électriques (17) sur le support (10) ou sur un support de conducteurs (15) par estampage à chaud,
- production d'un support (10) ou d'un support de conducteurs (15) avec des conducteurs électriques (17) au moyen d'une injection de film par l'arrière,
- réalisation de conducteurs électriques (17) sur un support de conducteurs (15) réalisé sous la forme d'une carte de circuit imprimé flexible au moins par sections,
- production d'une grille de connexion.

13. Procédé selon l'une quelconque des revendications 10 à 12, dans lequel des surfaces de contact (16.1, 16.2) permettant une mise en contact des conducteurs électriques (17) sont réalisées sur le support (10) directement ou au moyen de supports de conducteurs (15).
